Europäisches Patentamt

European Patent Office

Office européen des brevets

(11) Publication number: 0 668 678 A2

# EUROPEAN PATENT APPLICATION

(21) Application number: 95200367.1

(22) Date of filing: 15.02.95

(51) Int. Cl.6: H04L 5/06

(30) Priority: 22.02.94 IT MI940312

(43) Date of publication of application:
23.08.95 Bulletin 95/34

(84) Designated Contracting States:
DE FR IT

(71) Applicant: ITALTEL SOCIETA ITALIANA
TELECOMUNICAZIONI s.p.a.
P.le Zavattari, 12
I-20149 Milano (IT)

(72) Inventor: Cariolaro, Gianfranco
Via Callegari, 3
35037 Teolo - Padova (IT)
Inventor: Costanzi, Augusto
Viale Aldo Moro, 118/A
02010 Borgovelino Rieti (IT)

(74) Representative: Giustini, Delio
c/o Italtel Società Italiana
Telecomunicazioni s.p.a.
P.O. Box 10
I-20019 Settimo Milanese (MI) (IT)

(54) Orthogonal frequency division multiplexing (OFDM) system and method for data sequence transmission.

(57) Orthogonal frequency division multiplexing system and method (OFDM) for the transmission of data sequences or channels allowing to transmit and receive a double number of channels without considerable increase of the processing complexity.

The transmission system foresees 2N data sequences ($c_0$ - $c_{2N-1}$) and the same number of blocks (DS) for data staggering, which outputs are gathered in pairs and alternatively pre-modulated with an $f_0$ frequency and an $f_1$ frequency, and then summed up in N summation nodes ($\Sigma$), thus cutting in two the number of signals.

A processor (N-IDFT) performs the discrete Fourier transform for N points and the processor outputs are connected to N extractors (HSE) of the parts with symmetries $H_0$ and $H_1$ using Hermitiane and Antiermitiane symmetries.

The receiver has a dual structure.

Fig. 3

## Technical Field

This invention relates generally to a telecommunication systems known as OFDM (Orthogonal Frequency Division Multiplexing), that is digital orthogonal frequency division multiplexing systems for data transmission, where data coming from a source are divided into a given number of data sequences and multiplexed according to a frequency division format.

In particular the invention finds its preferred application, while it is not limited to the same, in the field of digital television transmissions systems.

Systems of this kind (or multicarrier) are employed to optimize the transmission of a large data flow, dividing the spectrum to be transmitted into a great number of sub-bands. This systems offers different advantages, such as for instance that to distribute the information avoiding troubles due to fading phenomena. The technical problem arising is therefore to manufacture a great number of high effective transreceivers, thus reducing in particular the number of complex operations to be made at each second.

## Background Art

The status of the known technique and the present invention, mainly referring to the transmitting portion of the system, since the receiving portion has essentially dual structure and operation.

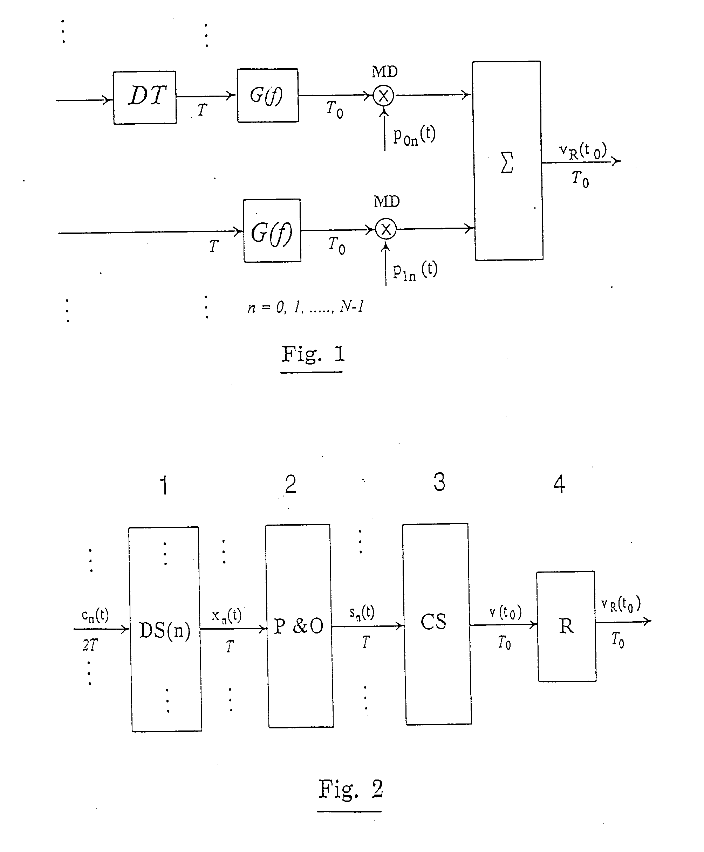

The system according to the invention foresees to make a discrete Fourier transform (DFT) followed by a polyphase filter consisting of a set of filters, essentially operating on real signals in order to better implement the functions foreseen by the theoretical scheme of subject devices shown in fig. 1.

In these systems, a plurality N of data sequences is divided into pairs, each pair of the sequence being considered as consisting of a real and an imaginary component.

One sequence of the pair, for instance the real sequence, is delayed in a block DT, therefore both cross two separate interpolator filters G(f), then both the sequences of the pair are modulated (in MD) with two carrier $P_{0n}(t)$ and $P_{1n}(t)$ having the same frequency, but $90°$ phase shifted, typically sine and cosine, Finally, signals so modulated are summed up in an adder $\Sigma$ whose output consists of the $V_R(t_0)$ signal. In Figure 1 and subs., time spacing between two subsequent values of the sequences have been indicated with T and $T_0$.

A system of this kind is described for instance in US-A-4 300 229 by B. Hirosaki.

A known implementation of the theoretical scheme in figure 1, is outlined in Fig. 2, foreseeing to divide the processing in four phases, through the processing indicated with DS(n), P&O, CS and R (and with figures 1, 2, 3, 4) respectively, and represented in summary through block arranged in cascade.

The operation made by the DS block (or Data Staggering) involves a simple multiplication, by 1 or by - j, respectively and is required for the separation of the real sequence from the imaginary one of each pair. The P&O block for pre-modulation and ordering, involves operations such as the multiplication by $j^k$, the execution of connections and the possible extraction of a conjugate signal and its multiplication by $j^k$.

The processing indicated with CS is made in three steps, that is, as said above, through a DFT (discrete Fourier transform on N points), the passage through a polyphase network consisting of N low rate operating filters, and then a parallel series conversion. Finally, the R block simply reads the real portion.

Operations of blocks 1, 2 and 4 are non critical, since the same are operations of neglectable calculation complexity, while critical processing, as for the speed and complexity aspects are those to be made in the CS block.

## Object of the Invention

The object of this invention is to improve the above mentioned transmission and reception systems, and particularly to halve the complexity of the transmission system or, as an alternative, to transmit a double number of channels having the same complexity of the systems of the known type.

## Disclosure of the Invention

In accordance with the invention is disclosed an orthogonal frequency division multiplexing system (OFDM) for the transmission of 2N sequences of data, consisting of a transmitter including:
- data staggering means receiving said sequences at input;
- first means able to perform the Fourier transform on signals of said sequences;
- filtering means for the synthesis of a polyphase network;
- parallel-serial conversion means connected to the outputs of said filtering means, which output consists of the multiplexed signal;

  characterized by the fact that said first means able to perform the Fourier transform foresee N inputs and N outputs, and by the fact that the transmitter also includes:
- means to multiply said N data sequences, alternatively for a first carrier having $F_o$ frequency and for a second carrier with $f_1$ frequency;

- means to add signals of each pair among them and form N sequences forming the N inputs of said first means able to perform the Fourier transform;
- means connected to the N inputs of said first means able to perform the Fourier transform to separate the components summed up according to the signal symmetries, each of said separation means having the two outputs connected to a corresponding filter means.

The invention consists also of an orthogonal frequency division multiplexing system according to claim 1, for the transmission of 2N data sequences, consisting of a receiver including:

- parallel-serial conversion means receiving at input the reception signal and producing N signals at output;
- filtering means connected to the outputs of said parallel serial conversion means, for the synthesis of a polyphase network;
- second means able to perform the Fourier transform on the signals of said sequences; and
- means performing a reverse data staggering function and producing said sequences at output;

characterized by the fact that said second means able to perform the Fourier transform foresee N inputs and N outputs, and by the fact that the receiver also includes:

- means, connected downstream said second means able to perform the Fourier transform, able to multiply the N sequences of output data alternatively by a first carrier having $-f_0$ frequency and by a second carrier having $-f_1$ frequency;
- means connected to the N pairs of outputs of said filtering means for the extraction of Hermitiane and Antiermitiane symmetries;
- means able to add up the signals of each pair coming out from said means for the extraction of Hermitiane and Antiermitiane symmetries among them and form N sequences forming the N inputs of said second means able to perform the Fourier transform.

The invention consists also of an orthogonal frequency division multiplexing method (OFDM) for the transmission of 2N data sequences, said method foreseeing the following steps:

a - to submit said input sequences to data staggering;
b - to perform the Fourier transform on signals of said sequences;
c - to filter said transformed signals;
d - to convert data filtered in parallel into the serial form to form the multiplexed signal;

characterized by the fact to foresee also the following steps:

a1 - to pre-modulate said N data sequences multiplying them alternatively by a first carrier having $F_0$ frequency and by a second carrier having $F_1$ frequency;
a2 - to add the pre-modulated signals with different frequencies two by two to form N sequences on which the Fourier transform is performed for N points;
b1 - to separate each one of said N sequences into two components using Hermitiane and Antiermitiane symmetries.

Finally the invention consists of a method for orthogonal frequency division demultiplexing method (OFDM) of a multiplexed signal, said method foreseeing the following steps:

f - to convert the received serial signal into N parallel signals;
g - to filter said N signals;
h - to perform the Fourier transform on the signals of said sequences; and
i - to perform a reverse data staggering function on the sequences submitted to Fourier transform to obtain again said N sequences;

characterized by the fact to perform said Fourier transform through means foreseeing N inputs and N outputs and by the fact to foresee also the following steps:

g1 - to extract Hermitiane and Antiermitiane symmetries from said filtered N signals
g2 - to add in pair among them the signals obtained from the extraction of Hermitiane and Antiermitiane symmetries and form N sequence to submit to said Fourier transform.

h1 - to multiply the N sequences submitted to Fourier transform, alternatively by a first carrier having $-f_0$ frequency and by a second carries having $-f_1$ frequency.

According to the invention, it is possible to transmit and receive a double number 2n of channels having complexity as above.

As an alternative, the same information capacity can be transmitted and received with a halved complexity system.

Referring to the first possibility, the 2N frequencies foreseen for the frequency division multiplexing shall be equally spaced as follows:

$$f_n = F/4 + nF/2 \qquad 0 \leq n \leq "N-1$$

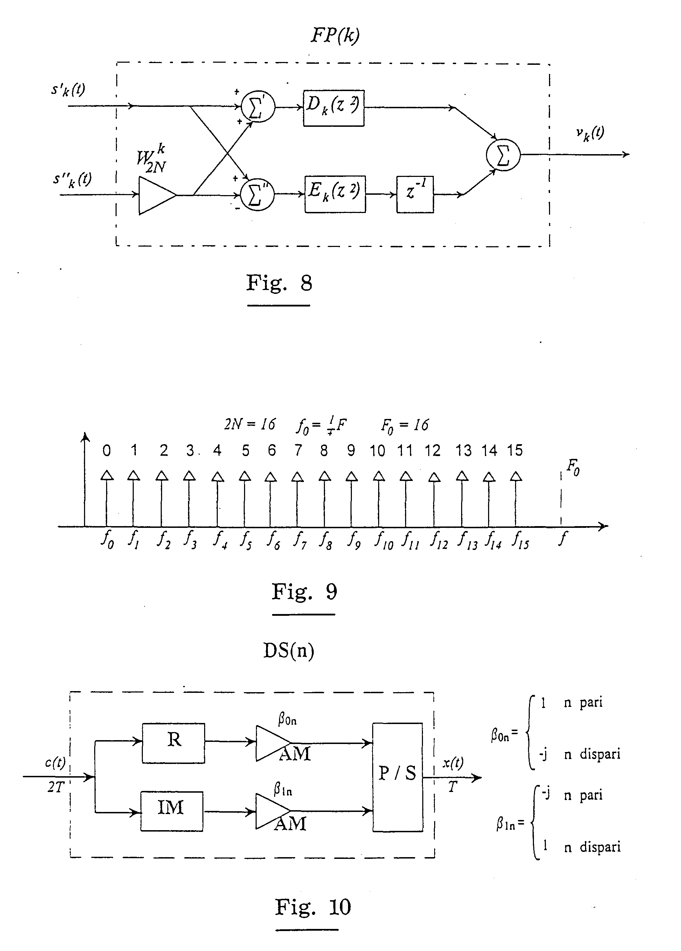

as shown in Fig. 9 for the instance 2N = 16 channels.

According to the invention, the 2N input sequences are first gathered in pairs to form N sequences $S_0$, $S_1$, $S_2$, ... $S_{N-1}$, each pair being obtained with a data staggering device $DS_0$, $DS_1$, $DS_2$, ... $DS_{2N-1}$, essentially similar to that of former known systems. The structure of a $DS_n$ block is outlined in Fig. 10 and includes an R block for the extraction of the real portion and an IM block for imaginary portion extraction, having outputs connected to AM multiplexers multiplying signals by $\beta_{0n}$ and $\beta_{1n}$ signals, respectively. Figure 10 shows different values assumed by multiplication factors according to the values of n. Signals coming out from AM blocks are therefore collected in a sole x-(t) signal in the parallel-serial converter P/S.

Always according to the invention, the 2N input sequences are obtained through said means for the extraction of Hermitiane and Antiermitiane symmetries.

Thanks to the above mentioned gathering in pairs of sequences (and to the subsequent extraction of the two sequences of each pair on the basis of Hermitiane and Antiermitiane symmetries) it is possible to use means to perform the Fourier transform always on N points, that is with processing complexity equal to that of known systems, but transmitting in the specific instance 2N sequences instead of N.

## Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:

Fig. 1, already described, outlines the treatment of one of the sequence pairs according to the conventional scheme;

Fig. 2, already described, shows the general diagram for the processing of an OFDM system;

Fig. 3 shows a transmitter diagram according to the invention for the 2N = 16 instance;

Figures 4 and 5 show symmetries of signals at input of the processor performing the Fourier transform;

Fig. 6 shows the separation of two combined sequences using Hermitiane and Antiermitiane symmetries;

Fig. 7 shows the structure of one of HSE extractors;

Fig. 8 shows the structure of an FP block;

Fig. 9, already described, shows the allocation of frequencies for the frequency division multiplexing;

Fig. 10, already described, shows the structure of a DS$_n$ block; and

Fig. 11 shows the diagram of a receiver according to the invention for the 2N = 16 instance.

## Detailed Description of the Preferred Embodiment

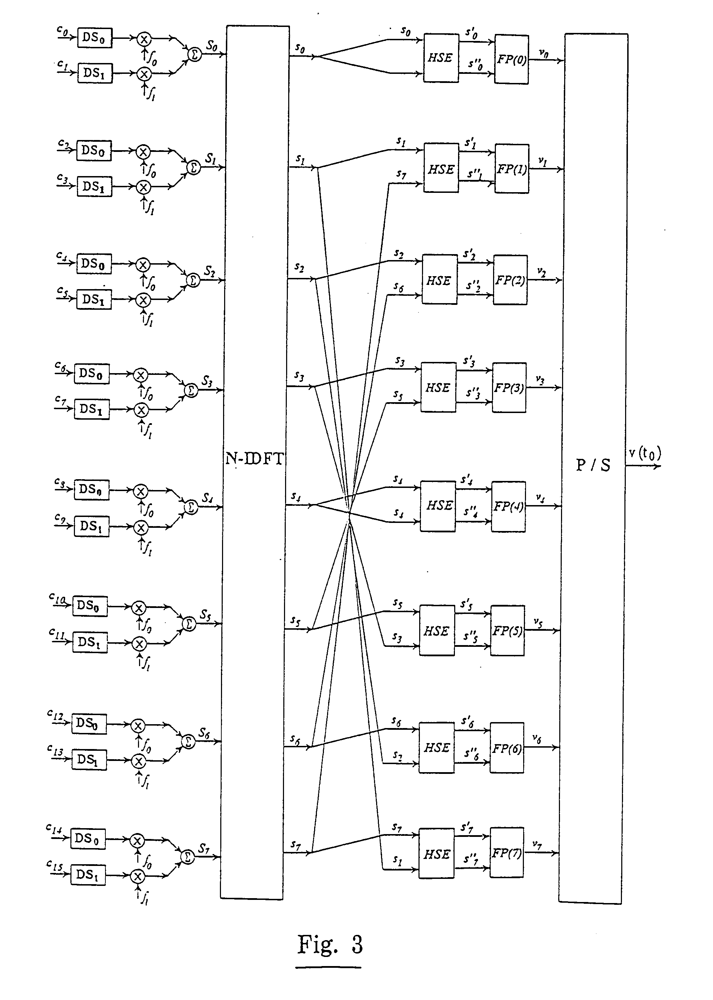

Particularly referring to Fig. 3, the transmission system foresees 2N sequences of $C_0$ - $C_{2N-1}$ data at input brought to the input of a same number of DS blocks (data staggering) which are essentially similar to DS(n) components known (see e.g. the diagram in Fig. 10).

The two signals of the N pairs are therefore alternatively pre-modulated with an $f_0$ frequency and an $f_1$ frequency, which is equivalent to multiply the input signal by $j^k$ or $-j^k$. Pre-modulation carriers are expressed by:

$$e^{j2\pi f_0 t} \text{ n even } f_0 = F/4 \quad 1)$$
$$e^{j2\pi f_1 t} \text{ n odd } f_1 = 3F/4 \quad 2)$$

Since the operation rate in this point of the system is F, pre-modulation 1) is obtained as multiplication by:

$$j^k \text{ at time } t = kT$$

and pre-modulation 2) s obtained from multiplication by:

$$(-j)^k \text{ at time } t = kT$$

The sequences of each pair are therefore summed up, according to the invention, in N summation nodes $\Sigma$, thus cutting the number of signals in two.

An N-IDFT processor follows, performing the discrete Fourier transform for N points. This processing takes place at a rate equal to F, then with the same complexity of a conventional system operating on N sequences, that is one half of the 2N input sequences of the present invention.

N extractors HSE of the portions with $H_0$ and $H_1$ symmetries are connected to the outputs of the IDFT processor.

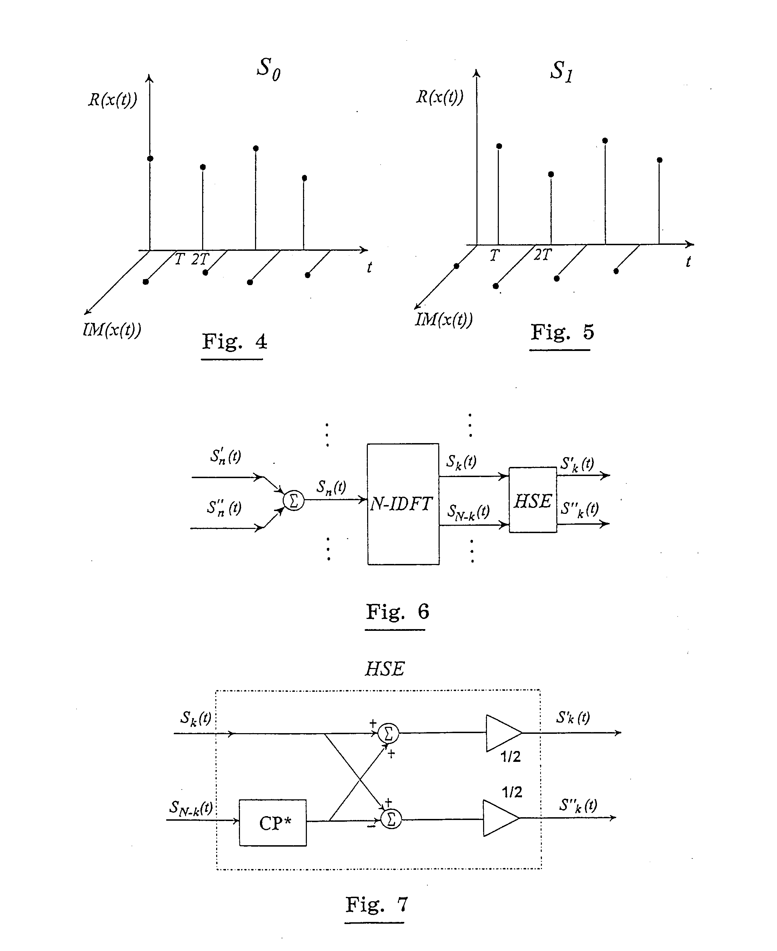

According to the invention, the extraction or separation of the two sequences $s_k$, $s_{k+1}$ of a pair (that is of two subsequent sequences) is obtained in HSE blocks (Hermitian Symmetry Extractor) separating them using Hermitiane and Antiermitiane symmetries described hereafter referring to Figures 6 and 7.

Input sequences are complex data of the general type; however after the data staggering made by DS blocks, the following symmetries for $S_0$ and $S_1$ apply, shown referring to Figures 4 and 5:

for n even, signals $x_n(t)$ are real at even instants and imaginary at odd instants ($S_0$ symmetry);

for n odd, signals $x_n(t)$ are real at odd instants and imaginary at even instants ($S_1$ symmetry).

After pre-modulation with the fo carrier frequency fo, the $S_0$ symmetry becomes the symmetry:

$$\Sigma_0 = \text{"real signal" (at each instant)},$$

while after pre-modulation with $f1 = 3F/4$ carrier frequency, the $S_1$ symmetry becomes the symmetry:

$$\Sigma_1 = \text{"merely imaginary signal" (at each instant)}.$$

Consequently, the n-th input at the N-IDFT processor (fig.6), assumes the form:

$$S_n(t) = S'_n(t) + S''_n(t) \qquad 3)$$

where $S'_n(t)$ is real and $S''_n(t)$ is merely imaginary. Therefore, the k-th output of the N'IDFT processor assumes the form

$$S_k(t) = s'_k(t) + s''_k(t) \qquad 4)$$

where $s'_k(t)$ has the Hermitiane symmetry (Ho), that is

$$S'_{n-k}(t) = s'_k(t)^* \qquad 5)$$

and $s''_k(t)$ has the Antiermitiane symmetry (H1), that is

$$S''_{n-k}(t) = -s''_k(t)^* \qquad 6)$$

$S'_{n-k}(t)$ and $s''_{n-k}(t)$ components can then be extracted from the N-IDFT processor using these symmetries, according to relations:

$$s'_k(t) = 1/2\,(s_k(t) + s^*_{n-k}(t))\,,\ S''_k(t) = 1/2\,(s_k(t) - s^*_{n-k}(t))$$

for any instant t belonging to the Z(T) group of T integer multiples.

This breakdown is unique since any complex function can be univocally broken down, partly with an Ho symmetry and partly with an H1 symmetry. In this case, the complex function is given by $s_k(t)$ considered as function of k, for t which is fixed.

Pairs of outputs of HSE extractors are connected to N pair filters FP(k), each one supplying a $v_k$ output (see Fig. 3) connected to the parallel-serial converter P/S.

The structure of an FP block is shown in Fig. 8 and includes a multiplexer for the complex constant $W^k_{2N} = \exp(j2\pi k/N)$ on one line, for instance that carrying the $s''_k(t)$ signals and two adders $\Sigma'$ and $\Sigma''$, one on each line, summing the signal of their line to the signal of the other one. The filter $D_k(z^2)$ and $E_k(z^2)$ respectively are therefore foreseen, while the $z^{-1}$ block is arranged on the delayed line.

The two lines are then summed up in a further adder $\Sigma$ to form the $v_k$ output.

The functions of the filters can be obtained from the univocal breakdown of $H'_k(z)$, given by:

$$H'_k(z) = D_k(z^2) + z^{-1}E_k(z^2)$$

FP polyphase filter networks essentially have the same complexity of those of the former technique, even if they are for 2N signals.

In the P/S block, N complex signals produced by N networks FP are converted into serial signals with a rate $F_0 = NF$ representing the transmitter output $v(t_0)$.

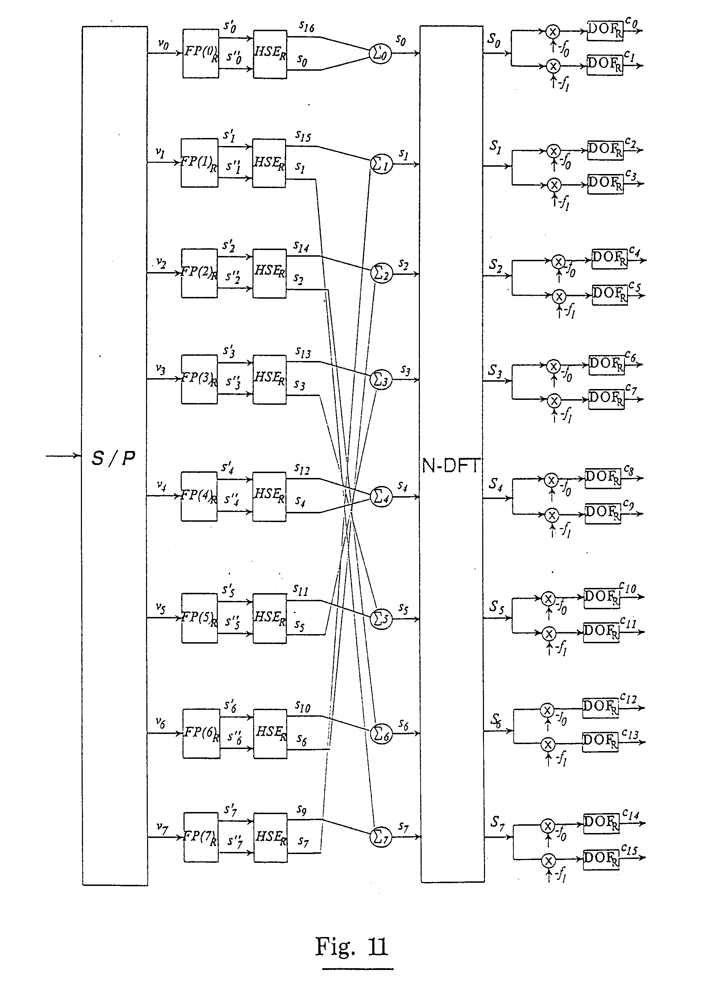

According to the invention, the receiver consists of the components having reverse operation versus those present in the transmitter, and is shown in Fig. 11.

As shown in said figure, it includes a serial-parallel converter S/P receiving the reception signal at input and producing $v_K$ signals at output (8 in the example shown). N outputs of the serial-parallel converter S/P are connected to the same number of filters $FP(k)_R$, reciprocals of FP(k) filters of the transmitter.

Each one of the $FP(k)_R$ filters has two outputs $s'_k$ and $s''_k$ connected to the symmetry extractors $HSE_R$ reciprocals of simmetry extractors seen for the transmitter. The output pairs s are connected in the corresponding summations $\Sigma$, and the outputs of these last ($s_k$) applied to the N-DFT processor performing the discrete Fourier transform for N points. The outputs of the N-DFT processor are therefore applied to separators, each one formed of two parallel multipliers for ($-f_0$) and ($-f_1$) respectively, with each multiplier output applied to a corresponding $DOF_R$ block, reciprocal of the DS block of the transmitter, producing at output signals $c_0 - c_{2N-1}$.

The advantages of the invention are clear, since thanks to the above mentioned gathering in pairs of the 2N input sequences and to their subsequent separation through said means for the extraction of Hermitiane and Antiermitiane symmetries enables the use of a processor (N-DFT in transmission and N-IDFT at receipt) showing the same circuit complexity of processors employed in transmission systems suitable to transmit N sequences.

While a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

**Claims**

1. Orthogonal frequency division multiplexing system (OFDM) for the transmission of 2N sequences of data ($c_0$ -$c_{2N-1}$), consisting of a transmitter including:
   - data staggering means (DSk) receiving said sequences ($c_0$ - $c_{2N-1}$) at input;
   - first means (N-IDFT) able to perform the Fourier transform on signals of said sequences;
   - filtering means (FP(0) - FP(N-1)) for the synthesis of a polyphase network;
   - parallel-serial conversion means (P/S) connected to the outputs of said filtering means (FP(0) -FP(N-1)), which output consists of the multiplexed signal ($v(t_0)$);
   characterized by the fact that said first means (N-IDFT) able to perform the Fourier transform foresee N inputs and N outputs, and by the fact that the transmitter also includes:
   means to multiply said N data sequences ($c_0$ - $c_{N-1}$), alternatively for a first carrier having $f_0$ frequency and for a second carrier with $f_1$ frequency;
   - means ($\Sigma_1$ - $\Sigma_{N-1}$) to add signals of each pair among them and form N sequences ($S_0$, $S_1$, $S_2$, ..$S_{N-1}$) forming the N inputs of said first means (N-IDFT) able to perform the Fourier transform;
   - means (HSE) connected to the N inputs of said first means (N-IDFT) able to perform the Fourier transform to separate the components summed up according to the signal symmetries, each of said separation means (HSE) having the two outputs connected to a corresponding filter means (FP(0) - FP(N-1)).

2. Orthogonal frequency division multiplexing system (OFDM) according to claim 1, for the transmission of 2N data sequences ($c_0$ - $c_{2N-1}$), consisting of a receiver including:
   - parallel-serial conversion means (S/P) receiving at input the reception signal and producing N signals at output ($v_k$);
   - filtering means (EP(0)$_R$ - FP(N-1)$_R$, connected to the outputs of said parallel-serial conversion means (S/P), for the synthesis of a polyphase network;
   - second means (N-IDFT) able to perform the Fourier transform on the signals of said sequences; and
   - means (DOF$_R$) performing a reverse data staggering function and producing said sequences ($c_0$ - $c_{2N-1}$) at output;
   characterized by the fact that said second means (N-IDFT) able to perform the Fourier transform, foresee N inputs and N outputs, and by the fact that the receiver also includes:
   - means, connected downstream said second means (N-IDFT) able to perform the Fourier transform, able to multiply the N sequences of data at output ($s_0$ - $s_{N-1}$) alternatively by a first carrier having (-$f_0$) frequency and by a second carrier having (-$f_1$) frequency;
   - means (HSE$_R$) connected to the N pairs of outputs of said filtering means (FP(0)$_R$ - FP(N-1)$_R$) for the extraction of Hermitiane and Antiermitiane symmetries;
   - means ($\Sigma_1$ - $\Sigma_{N-1}$) able to add up the signals of each pair coming out from said means (HSE$_R$) for the extraction of Hermitiane and Antiermitiane symmetries among them and form N sequences ($S_0$, $S_1$, $S_2$, .. $S_{N-1}$), forming the N inputs of said second means (N-IDFT) able to perform the Fourier transform.

3. Orthogonal frequency division multiplexing method (OFDM) for the transmission of 2N data sequences ($c_0$ - $c_{2N-1}$), said method foreseeing the following steps:
   a - to submit said input sequences ($c_0$ - $c_{2N-1}$) to data staggering (DSk);
   b - to perform the Fourier transform (N-IDFT) on signals of said sequences;
   c - to filter (FP(0) - FP(N-1) said transformed signals;
   d - to convert data filtered in parallel into the serial form (PS/) to form the multiplexed signal ($v(t_0)$);
   characterized by the fact to foresee also the following steps:
   a1 - to pre-modulate said N data sequences ($c_0$ - $c_{N-1}$) multiplying them alternatively by a first carrier having $f_0$ frequency and by a second carrier having $f_1$ frequency;
   a2 - to add the pre-modulated signals with different frequencies two by two to form N sequences ($S_0$, $S_1$, $S_2$, .. $S_{N-1}$) on which the Fourier transform is performed for N points (N-IDFT);
   b1 - to separate each one of said N sequences ($S_0$, $S_1$, $S_2$, .. $S_{N-1}$) into two components using Hermitiane and Antiermitiane symmetries.

4. Method for orthogonal frequency division demultiplexing method (OFDM) of a multiplexed signal, according to claim 3, said method foreseeing the following steps:

f - to convert (S/P) the received serial signal into N parallel signals ($v_k$);

g - to filter (FP(0)$_R$ - FP(N-1)$_R$) said N signals ($v_k$);

h - to perform the Fourier transform (N-IDFT) on the signals of said sequences; and

i - to perform a reverse data staggering function (DOFR) on the sequences submitted to Fourier transform to obtain again said N sequences ($c_0$ - $c_{2N-1}$);

characterized by the fact to perform said Fourier transform through means foreseeing N inputs and N outputs and by the fact to foresee also the following steps:

g1 - to extract (HSER) Hermitiane and Antiermitiane symmetries from said filtered N signals ($v_k$);

g2 - to add ($S_1$ - $S_{N-1}$) in pair among them the signals obtained from the extraction of Hermitiane and Antiermitiane symmetries and form N sequences ($S_0$, $S_1$, $S_2$, .. $S_{N-1}$) to submit to said Fourier transform (N-IDFT).

h1 - to multiply the N sequences submitted to Fourier transform ($s_0$ - $s_{N-1}$) alternatively by a first carrier having -$f_0$ frequency and by a second carries having -$f_1$ frequency.

Fig. 1

Fig. 2

Fig. 3

$S_0$

$R(x(t))$

$T$ $2T$

$t$

$IM(x(t))$

Fig. 4

$S_1$

$R(x(t))$

$T$ $2T$

$t$

$IM(x(t))$

Fig. 5

$S'_n(t)$

$S''_n(t)$

$\Sigma$ → $S_n(t)$ → N-IDFT

$S_k(t)$ → HSE → $S'_k(t)$

$S_{N-k}(t)$ → $S''_k(t)$

Fig. 6

HSE

$S_k(t)$

+ $\Sigma$ + → 1/2 → $S'_k(t)$

$S_{N-k}(t)$ → CP* → + $\Sigma$ − → 1/2 → $S''_k(t)$

Fig. 7

FP(k)

$$s'_k(t)$$

$$W_{2N}^k$$

$$s''_k(t)$$

$$+ \quad \Sigma' \quad D_k(z^2)$$

$$+ \quad \Sigma'' \quad E_k(z^2) \quad z^{-1}$$

$$\Sigma \quad v_k(t)$$

Fig. 8

$$2N = 16 \qquad f_0 = \frac{1}{T}F \qquad F_0 = 16$$

0  1  2  3  4  5  6  7  8  9  10  11  12  13  14  15

$$f_0 \quad f_1 \quad f_2 \quad f_3 \quad f_4 \quad f_5 \quad f_6 \quad f_7 \quad f_8 \quad f_9 \quad f_{10} \quad f_{11} \quad f_{12} \quad f_{13} \quad f_{14} \quad f_{15} \qquad f$$

$$F_0$$

Fig. 9

DS(n)

$$\frac{c(t)}{2T}$$

R $\qquad \beta_{0n}$ AM

IM $\qquad \beta_{1n}$ AM

P / S $\quad \dfrac{x(t)}{T}$

$$\beta_{0n} = \begin{cases} 1 & n \text{ pari} \\ -j & n \text{ dispari} \end{cases}$$

$$\beta_{1n} = \begin{cases} -j & n \text{ pari} \\ 1 & n \text{ dispari} \end{cases}$$

Fig. 10

11

Fig. 11